# EUROPÄISCHE PATENTSCHRIFT

(11) **EP 0 742 999 B1**
(45) Veröffentlichungstag und Bekanntmachung des Hinweises auf die Patenterteilung: **01.07.1998**
(21) Anmeldenummer: 96106209.8
(22) Anmeldetag: 19.04.1996
(51) Int. Cl.: A01K 1/02, A01K 1/00

(54) **Tierschutzhütte**
Shelter for animals
Refuge pour animaux

(30) Priorität: 15.05.1995 DE 19517788; 24.05.1995 DE 19519185
(43) Veröffentlichungstag der Anmeldung: 20.11.1996
(73) Patentinhaber: Gloning, Isidor, 73485 Zöbingen (DE); Bauer, Otto, 74677 Dörzbach (DE)
(72) Erfinder: Gloning, Isidor, 73485 Zöbingen (DE); Bauer, Otto, 74677 Dörzbach (DE)
(74) Vertreter: MEISSNER, BOLTE & PARTNER

(56) Entgegenhaltungen:
- EP-A- 0 338 580
- EP-A- 0 504 076
- WO-A-86/02433

## Beschreibung

Die Erfindung betrifft eine Tierschutzhütte nach dem Oberbegriff des Patentanspruches 1.

Es ist seit langer Zeit bekannt, daß Schweine sich bei relativ niedrigen Temperaturen besonders wohl fühlen. Für eine laktierende Muttersau liegt die Optimaltemperatur bei etwa 15 °C. Demgegenüber sind Ferkel äußerst kältempfindlich. Kurz nach der Geburt benötigen sie eine Umgebungstemperatur von bis zu 33 °C. Mit zunehmendem Alter geht dieser Wärmebedarf zurück, so daß die Umgebungstemperatur pro Lebenswoche um ca. 2 °C herabgesetzt werden kann, bis die "Normaltemperatur" erreicht ist.

Um Saugferkel nun in der Nähe der Muttersau halten zu können, sind seit langer Zeit besondere Tierschutzhütten, sogenannte Ferkelnester, bekannt. Ein solches ist beispielsweise in der DE 38 13 471 A1 gezeigt. Sie umfassen eine Kiste mit mindestens einer Zutrittsöffnung, die durch einen Vorhang aus herabhängenden Kunststoffstreifen geschlossen ist. Durch diesen Vorhang können die Ferkel nach Belieben in die Kiste hinein- und wieder herausgehen.

Durch dieses häufige Hinein- und Hinausgehen oder auch Spielen mit dem Vorhang wird dieser hohem Verschleiß und starker Verschmutzung ausgesetzt.

Die gleiche Problematik ergibt sich auch bei Tierschutzhütten für Hunde, Pferde, Schafe usw..

Der Erfindung liegt die Aufgabe zugrunde, eine Tierschutzhütte der eingangs genannten Art dahingehend aufzuzeigen, daß bei optimaler Nutzung durch die Tiere ein wenig arbeitsaufwendiger Dauerbetrieb möglich ist.

Diese Aufgabe wird durch eine Tierschutzhütte nach dem Patentanspruch 1 gelöst.

Ein wesentlicher Punkt der Erfindung liegt darin, daß die Streifen nicht wie bisher fest montiert, sondern, vorzugsweise ohne Werkzeug, auswechselbar befestigt sind. Dadurch wird es möglich, defekte Streifen des Vorhangs jederzeit und mit geringem Arbeitsaufwand auszuwechseln, so daß er optimal schließt. Dadurch wiederum bleibt das erstrebte Temperaturmilieu im Inneren der Tierschutzhütte bzw. des Ferkelnestes bzw. der Kiste erhalten.

Die Klemmhalterung wird vorzugsweise an der Kiste verschwenkbar angelenkt. Dadurch kann der Vorhang samt Klemmhalterung verschwenkt werden, was die Reinigung und ggf. auch das Auswechseln von einzelnen Streifen erleichtert. Dies ist insbesondere dann der Fall, wenn die Klemmhalterung samt dem Streifenvorhang soweit hochschwenkbar angelenkt ist, daß die im Normalzustand dem Inneren der Kiste zugewandte Seite des Streifenvorhangs zum Reinigen zugänglich ist.

Die Kiste ist mit einem hochhebbaren, vorzugsweise mit einem hochklappbaren Deckel versehen, so daß man das Innere der Tierschutzhütte leicht reinigen kann. An diesen hochklappbaren Deckel ist die Klemmhalterung vorzugsweise angelenkt, so daß der Streifenvorhang zusammen mit dem Deckel hochgeklappt werden kann. Die Schwenkrichtung des Deckels ist vorzugsweise dieselbe wie die der Klemmhalterung.

Vorzugsweise umfaßt die Klemmhalterung einen Auflagebalken und eine Klemmschiene, die unter Zwischenlage und Einklemmen der Streifen auf den Auflagebalken aufklemmbar ist. Somit ist die Klemmhalterung nur zweistückig. Besonders vorteilhaft ist die Anordnung dann, wenn die Klemmschiene und der Auflagebalken derart ausgebildet sind, daß die Streifen zur Bildung eines Luftpolsters zwischen zwei im wesentlichen gleichen Vorhangflächen über den Auflagebalken hängbar sind. Eine derartige Konstruktion bringt zum einen den Vorteil mit sich, daß der Zuschnitt und die Montage besonders einfach sind, zum anderen ist sichergestellt, daß die Vorhangstreifen nicht so ohne weiteres aus der Klemmhalterung herausrutschen können, wie dies beispielsweise bei endseitig eingeklemmten Streifen der Fall ist. Darüber hinaus gewährleistet der Vorhang eine besonders gute Wärmeisolierung selbst dann, wenn ein Teil der Streifen z. B. durch dazwischengeratenes Stroh eine Lücke bildet.

Der Auflagebalken wird vorzugsweise über die gesamte Breite der Zutrittsöffnung reichend einstückig ausgebildet. Er stellt somit eine Art "Vorhangstange" dar. Die Klemmschiene wird vorzugsweise aus aneinanderreihbaren Teilstücken gefertigt, so daß der Aufbau auch längerer Vorhänge unproblematisch ist und nicht allzuviel Kraft, insbesondere aber kein Werkzeug erfordert.

Der Auflagebalken wird vorzugsweise an der Kiste befestigt. Dies bedeutet, daß das Gewicht des Vorhanges, das ja auf dem Auflagebalken aufliegt, direkt auf die Kiste übergeleitet wird, und die Klemmfestigkeit somit durch das Vorhanggewicht sowie durch die beim Hinein- und Hinauslaufen der Ferkel auftretenden Kräfte nicht wesentlich beeinflußt wird.

Vorzugsweise ist jede der beiden Vorhangflächen doppellagig ausgebildet. Die Streifen der ersten Lage liegen hierbei über den Stoßstellen zwischen den Streifen der zweiten Lage zu deren Abdichtung, was in sehr einfacher Weise die Dichtigkeit der Anordnung erheblich verbessert, ohne einen größeren Aufwand zu verursachen. Die Streifen der ersten Lage reichen hierbei über die Gesamthöhe des Vorhangs, während die Streifen der zweiten Lage kürzer ausgebildet sind. Dadurch wird eine leichtere Verschiebbarkeit der Streifen beim Durchqueren des Vorhangs gewährleistet. Vorzugsweise sind hierbei die kürzeren Streifen im wesentlichen um die Höhe eines durchschnittlichen Tieres kürzer als die längeren Streifen, wobei diese Höhe insbesondere auf noch sehr junge Tiere zugeschnitten wird, da diese weniger Kraft haben, den Vorhang zu durchqueren. Insbesondere gilt obiges für Ferkel.

Der Auflagebalken weist vorzugsweise eine Aufnahme zum Einstecken eines Scharnierprofils auf, was die Montage der Gesamtanordnung wesentlich erleichtert. Vorzugsweise ist die Klemmhalterung ggf. samt einem dazugehörigen Scharnierprofil als Strangpreßprofil vorzugsweise aus Aluminium ausgebildet, so daß eine äußerst kostengünstige Fertigung möglich ist.

Nachfolgend wird eine besonders bevorzugte Ausführungsform der Erfindung anhand von Abbildungen näher erläutert. Hierbei zeigen:
- Fig. 1: eine Vorderansicht auf eine Ausführungsform der erfindungsgemäßen Tierschutzhütte in Richtung auf deren Vorhang,
- Fig. 2: eine Ansicht entlang der Linie II-II aus Figur 1,
- Fig. 3: einen Schnitt entlang der Linie III-III aus Fig. 1,
- Fig. 4: einen Schnitt durch ein Scharnierprofil,
- Fig. 5: einen Schnitt durch eine Klemmhalterung und
- Fig. 6: eine schematisierte Draufsicht auf einen Vorhang.

Bei der nachfolgenden Beschreibung werden für gleiche und gleichwirkende Teile dieselben Bezugsziffern verwendet.

Die im Ausführungsbeispiel gezeigte Tierschutzhütte umfaßt eine Kiste 10, deren Boden offen ist und auf einem üblichen Untergrund, einem isolierten Boden oder dergleichen steht. Auf ihrer Oberseite ist die Kiste mit einem Deckel 12 versehen, der mittels eines Scharniers 13 an der Rückwand der Kiste 10 so angelenkt ist, daß man ihn hochklappen kann.

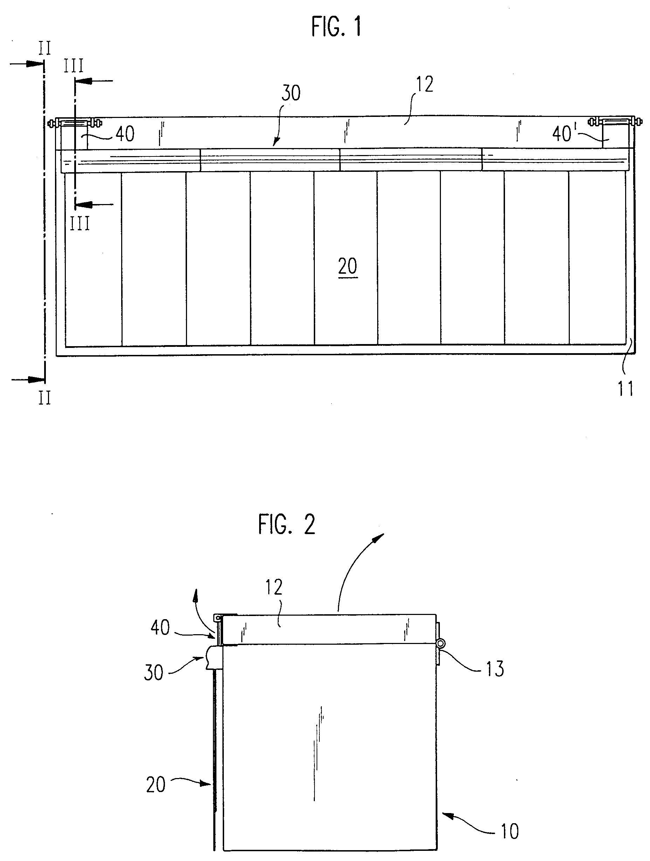

Die in Figur 1 lediglich angedeutete Zutrittsöffnung 11 ist durch einen Vorhang 20 abgedeckt. Der Vorhang 20 ist in einer Klemmhalterung 30 befestigt, welche über Scharnierprofile 40, 40' am Deckel 12 angelenkt ist.

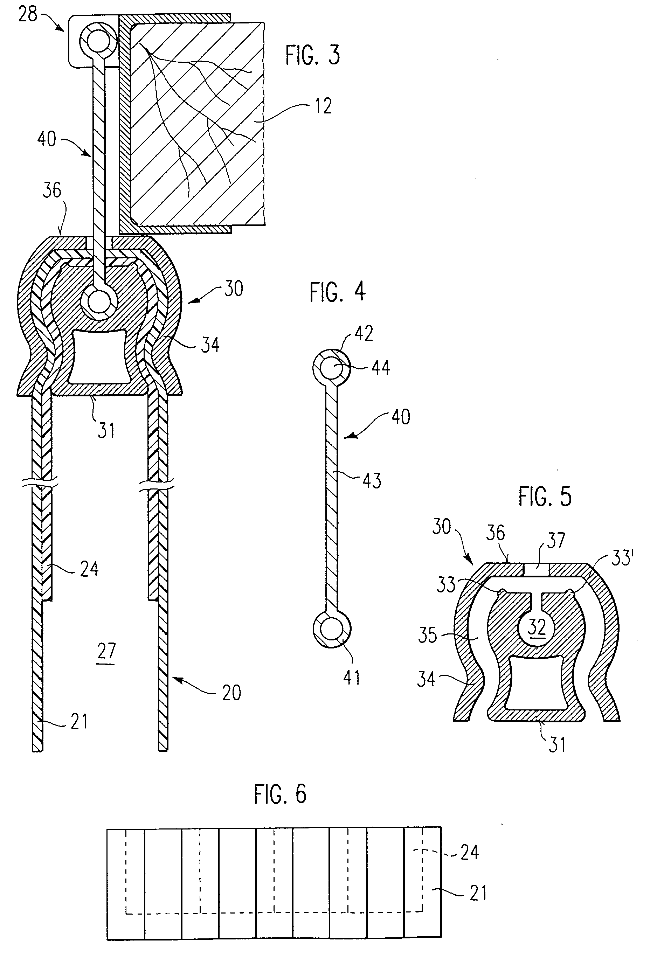

Wie in Figur 3 gezeigt, umfaßt der Vorhang 20 längere Streifen 21 und kürzere Streifen 24 , wobei die längeren Streifen 21 im wesentlichen bis auf den Boden hängen und die kürzeren Streifen 24 etwa 15 cm, also die durchschnittliche Höhe eines Saugferkels über dem Boden enden, wie dies in Figur 3 angedeutet ist.

Die Streifen umgrenzen zwischeneinander ein Luftpolster 27, das isolierend wirkt.

Wie in Figur 6 gezeigt, werden die Stoßstellen zwischen den längeren Streifen 21 von den kürzeren Streifen 24 abgedeckt.

Hierbei sind die kürzeren Streifen 24 noch dazu breiter (um ein ganzzeiliges Vielfaches breiter) als die längeren Streifen 21.

Die Klemmhalterung 30 umfaßt, wie insbesondere in Figur 5 im Detail gezeigt ist, einen Auflagebalken 31, der als Strangpreßprofil ausgebildet ist und in seinem oberen Abschnitt eine nach offene Scharnieraufnahme 32 aufweist. Weiterhin sind auf der Oberseite des Auflagebalken 31 Klemmnasen 33, 33' vorgesehen, deren Funktion weiter unten genauer erläutert wird.

Schließlich umfaßt die Klemmhalterung 30 Klemmschienen 34 , deren Innenkontur im wesentlichen der Außenkontur des Auflagebalkens 31 entspricht. Diese Kontur, die aus Figur 5 leicht ersichtlich ist, führt zu einem "labyrinthförmigen" Zwischenraum 35, der im wesentlichen der Dicke eines kurzen Streifens 24 zuzüglich eines aufgelegten langen Streifens 21 entspricht.

Zum Zusammenbau eines Vorhangs legt man eine Reihe von kurzen Streifen 24 und eine entsprechende Anzahl langer Streifen 21 gemäß dem in Figur 6 gezeigten Muster über den Auflagebalken 31 und drückt dann Klemmschienenabschnitte 34 - in Figur 1 sind vier solcher Abschnitte gezeigt - auf die so gebildete Anordnung auf, so daß sich die Streifen 21 und 24 eng an die Außenkontur des Auflagebalkens 31 anschmiegen und von den Klemmschienen 34 in der in Figur 3 gezeigten Position fixiert werden. Hierbei drücken sich die oben erwähnten Klemmnasen 33, 33' in das elastische Material der kürzeren Streifen 24 und sichert diese zusammen mit den längeren Streifen 21 gegen Verschiebung.

Die endseitigen Oberseiten 36 der Klemmschienen 34 werden mit einer Ausklinkung 37 versehen, die in Figur 5 angedeutet ist. Diese Ausklinkung hat eine Tiefe entsprechend der Breite des Scharnierprofils 40.

Das Scharnierprofil 40 umfaßt eine untere Verdickung 41, welche in ihrer Außenkontur der Innenkontur der Scharnieraufnahme 32 des Auflagebalkens 31 entspricht. Weiterhin ist eine obere Verdickung 42 vorgesehen, die (wie die untere Verdickung 41) mit einem durchgehenden Loch 44 versehen ist. Zwischen der untere Verdickung 41 und der obere Verdickung 42 erstreckt sich ein Steg 43, der in seiner Dicke der Ausklinkung 37 entspricht.

Aufgrund der Ausklinkung 37 (und eines entsprechenden Einschnittes in die an dieser Stelle angeordneten Streifen 21 und 24) ist es möglich, an jedem Ende der Klemmhalterung 30 einen Abschnitt eines Scharnierprofils 40 bzw. 40' mit der Klemmhalterung 30 zu verbinden. Die Scharnierprofile 40, 40' werden dann in Scharnierwinkeln 28 am Deckel 12 befestigt, wie dies in den Figuren 1 und 3 angedeutet ist.

Durch die oben beschriebene Ausbildung des Lamellenvorhanges weist dieser eine außerordentliche Dauerhaftigkeit auf und ist auch leicht zu reinigen. Es können sogar mit relativ geringem Aufwand die einzelnen Vorhangstreifen nach Öffnen der Klemmhalterung gereinigt werden, woraufhin dann der gesamte Vorhang wieder zusammengebaut wird. Durch Hochklappen des Vorhangs samt Klemmhalterung mittels der Scharnierprofile ist es möglich, die Rückseite der Vorhänge zu reinigen (abzuspritzen).

### Bezugszeichenliste

- 10: Kiste
- 11: Zutrittsöffnung
- 12: Deckel
- 13: Scharnier
- 20: Vorhang
- 21: langer Streifen
- 24: kurzer Streifen
- 27: Luftpolster
- 28: Scharnierwinkel
- 30: Klemmhalterung
- 31: Auflagebalken
- 32: Scharnieraufnahme
- 33, 33': Klemmnasen
- 34: Klemmschiene
- 35: Zwischenraum
- 36: Oberseite
- 37: Ausklinkung
- 40, 40': Scharnierprofil
- 41: untere Verdickung
- 42: obere Verdickung
- 43: Steg
- 44: Loch

## Patentansprüche

1. Tierschutzhütte, umfassend eine Kiste (10) mit mindestens einem Streifenvorhang (20) aus elastischem Material vor einer Zutrittsöffnung (11) zum Kisteninneren
**dadurch gekennzeichnet,**
daß die Streifen (21, 24) in einer an der Kiste (10) befestigten Klemmhalterung (30) lösbar und, insbesondere ohne Werkzeug, auswechselbar befestigt sind.

2. Tierschutzhütte nach Anspruch 1,
dadurch gekennzeichnet,
daß die Klemmhalterung (30) an der Kiste (10) verschwenkbar angelenkt ist.

3. Tierschutzhütte nach einem der vorhergehenden Ansprüche,
dadurch gekennzeichnet,
daß die Klemmhalterung samt dem Streifenvorhang (20) soweit hochschwenkbar angelenkt ist, daß die im Normalzustand dem Inneren der Tierschutzhütte (10) zugewandte Seite des Streifenvorhanges (20) zum Reinigen zugänglich ist.

4. Tierschutzhütte nach einem der vorhergehenden Ansprüche,
dadurch gekennzeichnet,
daß die Klemmhalterung (30) an einem hochhebbaren, vorzugsweise hochklappbaren Deckel (12) der Kiste (10) angelenkt ist.

5. Tierschutzhütte nach Anspruch 4,
dadurch gekennzeichnet,
daß die Schwenkrichtungen des Deckels (12) und der Klemmhalterung (30) übereinstimmen.

6. Tierschutzhütte nach einem der vorhergehenden Ansprüche,
dadurch gekennzeichnet,
daß die Klemmhalterung (30) einen Auflagebalken (31) und eine Klemmschiene (34) umfaßt, die unter Zwischenlage und Einklemmen der Streifen (21, 24) auf den Auflagebalken (31) aufklemmbar ist.

7. Tierschutzhütte nach Anspruch 6,
dadurch gekennzeichnet,
daß die Klemmschiene (34) und der Auflagebalken (31) derart ausgebildet sind, daß die Streifen (21, 24) zur Bildung eines Luftpolsters (27) zwischen zwei im wesentlichen gleichen Vorhangflächen über den Auflagebalken (31) hängbar sind.

8. Tierschutzhütte nach einem der Ansprüche 6 oder 7,
dadurch gekennzeichnet,
daß der Auflagebalken (31) über die gesamte Breite der Zutrittsöffnung (11) reichend ausgebildet ist und daß die Klemmschiene (34) aus aneinanderreihbaren Teilstücken besteht.

9. Tierschutzhütte nach Anspruch 8,
dadurch gekennzeichnet,
daß der Auflagebalken (31) an der Kiste (10) befestigt ist.

10. Tierschutzhütte nach einem der vorhergehenden Ansprüche,
dadurch gekennzeichnet,
daß die bzw. jede Vorhangfläche doppellagig ausgebildet ist und die Streifen (21) der ersten Lage über Stoßstellen zwischen Streifen (24) der zweiten Lage zu deren Abdichtung liegen.

11. Tierschutzhütte nach Anspruch 10,
dadurch gekennzeichnet,
daß die Streifen (21) der ersten Lage die Gesamthöhe des Vorhanges (20) definieren, während die Streifen (24) der zweiten Lage kürzer ausgebildet sind.

12. Tierschutzhütte nach Anspruch 11,
dadurch gekennzeichnet,
daß die Streifen (24) der zweiten Lage im wesentlichen um die Höhe eines durchschnittlichen Tieres kürzer als die Streifen (21) der ersten Lage sind.

13. Tierschutzhütte nach Anspruch 6,
dadurch gekennzeichnet,
daß der Auflagebalken (31) eine Aufnahme (32) zum Einstecken eines Scharnierprofiles (40) aufweist.

14. Tierschutzhütte nach einem der vorhergehenden Ansprüche,
dadurch gekennzeichnet,
daß die Klemmhalterung (30) und ggf. das Scharnierprofil (40) als Strangpreßprofil, vorzugsweise aus Aluminium ausgebildet sind.

## Claims

1. Animal shelter, comprising a box (10) having at least one strip curtain (20) made of elastic material in front of an entrance (11) to the box interior,
characterized in
that the strips (21, 24) are fastened in a releasable and, in particular tool-free, exchangeable manner in a clamp mounting (30) which is fastened to the box (10).

2. Animal shelter according to claim 1,
characterized in
that the clamp mounting (30) is coupled to the box (10) so as to be capable of swivelling.

3. Animal shelter according to one of the preceding claims,
characterized in
that the clamp mounting together with the strip curtain (20) is coupled so as to be capable of swivelling up far enough to allow the side of the curtain (20) normally directed towards the interior of the animal shelter (10) to be accessible for cleaning.

4. Animal shelter according to one of the preceding claims,
characterized in
that the clamp mounting (30) is coupled to a liftable, preferably upward folding cover (12) of the box (10).

5. Animal shelter according to claim 4,
characterized in
that the swivelling directions of the cover (12) and of the clamp mounting (30) are identical.

6. Animal shelter according to one of the preceding claims,
characterized in
that the clamp mounting (30) comprises a support beam (31) and a clamping rail (34), which is clampable onto the supporting beam (31) with the strips (21, 24) being inserted and clamped therebetween.

7. Animal shelter according to claim 6,
characterized in
that the clamping rail (34) and the support beam (31) are so designed that the strips (21, 24), for forming an air cushion (27) between two substantially identical curtain surfaces, may be hung over the support beam (31).

8. Animal shelter according to one of claims 6 or 7,
characterized in
that the support beam (31) is designed to extend over the entire width of the entrance (11) and that the clamping rail (34) consists of buttable sub-sections.

9. Animal shelter according to claim 8,
characterized in
that the support beam (31) is fastened to the box (10).

10. Animal shelter according to one of the preceding claims,
characterized in
that the or each curtain surface is of a double-layered design and the strips (21) of the first layer lie over joints between strips (24) of the second layer in order to seal said joints.

11. Animal shelter according to claim 10,
characterized in
that the strips (21) of the first layer define the overall height of the curtain (20), while the strips (24) of the second layer are shorter.

12. Animal shelter according to claim 11,
characterized in
that the strips (24) of the second layer are substantially shorter by the height of an average animal than the strips (21) of the first layer.

13. Animal shelter according to claim 6,
characterized in
that the support beam (31) has a receiver (32) for insertion of a hinge section (40).

14. Animal shelter according to one of the preceding claims,
characterized in
that the clamp mounting (30) and optionally the hinge profile (40) take the form of an extruded section, preferably of aluminium.

## Revendications

1. Refuge pour animaux comprenant une boîte (10) avec au moins un rideau à bandes (20) en matériau élastique agencé devant une ouverture d'entrée (11) du côté de l'intérieur de la caisse caractérisé en ce que les bandes (21,24) sont fixées de manière détachable et interchangeable, en particulier sans outil, dans un support à pinces (30) fixé à la caisse (10).

2. Refuge pour animaux selon la revendication 1, caractérisé en ce que le support à pinces (30) est articulé de manière pivotante à la caisse (10).

3. Refuge pour animaux selon l'une des revendications précédentes, caractérisé en ce que le support à pinces avec le rideau à bandes (20) est articulé en pivotement suffisamment loin vers le haut de telle sorte que la face du rideau (20) orientée en position normale vers l'intérieur du refuge pour animaux (10) soit accessible pour nettoyage.

4. Refuge pour animaux selon l'une des revendications précédentes, caractérisé en ce que le support à pinces (30) est articulé à un couvercle (12) de caisse (10) susceptible d'être levé vers le haut, avantageusement d'être basculé vers le haut.

5. Refuge pour animaux selon la revendication 4, caractérisé en ce que la direction de basculement du couvercle (12) concorde avec celle du support à pinces (30).

6. Refuge pour animaux selon l'une des revendications précédentes, caractérisé en ce que le support à pinces (30) comprend une barre d'appui (31) et un rail de pincement (34) susceptible d'être encliqueté sur la barre d'appui (31) en incluant et serrant les bandes (21,24).

7. Refuge pour animaux selon la revendication 6, caractérisé en ce que le rail de pincement (34) et la barre d'appui (31) sont formés de telle sorte que les bandes (21,24) peuvent être suspendues à la barre d'appui (31) de manière à former un coussin d'air (27) entre deux faces de rideaux sensiblement identiques.

8. Refuge pour animaux selon l'une des revendications 6 ou 7, caractérisé en ce que la barre d'appui (31) est formée de telle sorte à s'étendre sur l'ensemble de la largeur de l'ouverture d'entrée (11) et en ce que le rail de pincement (34) est constitué de pièces susceptibles d'être alignées les unes derrière les autres.

9. Refuge pour animaux selon la revendication 8, caractérisé en ce que la barre d'appui (31) est fixée à la caisse (10).

10. Refuge pour animaux selon l'une des revendications précédentes, caractérisé en ce que les, respectivement chaque, surfaces de rideau sont formées de manière double et en ce que les bandes (21) de la première couche s'étendent par-dessus les endroits de contact entre les bandes (24) de la seconde couche pour créer une étanchéité.

11. Refuge pour animaux selon la revendication 10, caractérisé en ce que les bandes (21) de la première couche définissent la hauteur totale du rideau (20) alors que les bandes (24) de la seconde couche sont plus courtes.

12. Refuge pour animaux selon la revendication 11, caractérisé en ce que les bandes (24) de la seconde couche sont plus courtes que les bandes (21) de la première couche d'une hauteur correspondant sensiblement à celle d'un animal moyen.

13. Refuge pour animaux selon la revendication 6, caractérisé en ce que la barre d'appui (31) présente un évidemment (32) pour recevoir un profil formant charnière (40).

14. Refuge pour animaux selon l'une des revendications précédentes, caractérisé en ce que le support à pinces (30) et, le cas échéant la barre de charnière (40), sont réalisés sous forme de profilés, avantageusement en aluminium.
